# DEMANDE DE BREVET EUROPEEN

(11) **EP 1 510 949 A1**
(43) Date de publication de la demande: **02.03.2005**
(21) Numéro de dépôt: 04292082.7
(22) Date de dépôt: 24.08.2004
(51) Int. Cl.: G06F 17/30

(54) **Procédé de détection d'occurrences de contenus dans des flux d'information**

(30) Priorité: 28.08.2003 FR 0310256
(71) Demandeur: Yacast Limited, Whetstone N20 9YU London (GB)
(72) Inventeur: Levy, Olivier, 75009 Paris (FR)
(74) Mandataire: Burbaud, Eric

(57) **Abrégé**

Dans une phase d'acquisition, on enregistre systématiquement pour chaque flux d'information une série d'empreintes numériques non-uniques calculées d'après l'information de ce flux. Dans une phase de génération de signature, on sélectionne une ou plusieurs portions de référence d'un contenu à détecter, indéterminé dans la phase d'acquisition, et on inclut dans une signature unique de ce contenu des empreintes numériques calculées d'après l'information de chaque portion de référence sélectionnée. La détection des occurrences du contenu est opérée en recherchant les empreintes de la signature générée dans chaque série d'empreintes enregistrée.

## Description

La présente invention concerne les techniques de recherche et de surveillance de contenus dans un ou plusieurs flux d'information. Elle vise particulièrement le cas où les contenus sont des contenus audiovisuels dont on souhaite détecter les occurrences dans des flux vidéo.

Un domaine d'application important de l'invention se situe dans un nouveau type de service consistant à reconnaître a posteriori les occurrences d'un contenu déterminé (par exemple un film, un clip musical, une séquence d'actualité, un spot publicitaire, etc.) dans les flux vidéo qui ont été diffusés par une ou plusieurs chaînes de télévision au cours d'une période écoulée pouvant s'étendre sur plusieurs mois. Ce service présente de nombreux intérêts, par exemple pour les auteurs de contenus ou les organismes qui perçoivent leurs droits, pour les annonceurs publicitaires, etc.

On conçoit que la charge de calcul qu'impose un tel service est considérable compte tenu de l'énorme quantité de données que représentent les flux vidéo susceptibles d'être pris en considération. En outre, les traitements de reconnaissance à effectuer ne sont pas aisés, car le contenu recherché peut avoir été diffusé avec des modifications, par exemple des recadrages, des coupures, des insertions de spots publicitaires ou autres.

Un autre domaine d'application de l'invention est celui de l'adressage par le contenu des bases de données vidéo de grande taille. Là aussi, l'idée est de pouvoir définir un certain contenu a posteriori (après que les flux vidéo ont été enregistrés dans la base) et repérer ses occurrences dans la base de données.

Dans le cas général, les flux d'information dans lesquels sont effectués les recherches n'auront pas été produits dans le but de permettre de telles recherches, ce qui exclut le recours aux techniques connues de tatouage numérique ("watermarking").

Le brevet US 6 567 550 décrit une méthode de récupération vidéo dans laquelle une étape préliminaire consiste à traiter un contenu vidéo à rechercher de façon à en extraire des images représentatives spécifiées par un utilisateur et à calculer un code pour chacune de ces images, sur la base de la distribution chromatique au sein de l'image et des intervalles de temps séparant les changements de plan dans le contenu vidéo. Il en résulte un nommage du contenu à rechercher par la concaténation des codes calculés pour les images représentatives spécifiées. Une fois qu'un certain nombre de contenus ont ainsi été nommés, un flux dans lequel la recherche est à effectuer est parcouru de façon à en extraire automatiquement des images représentatives pour lesquelles les codes sont calculés. Ces codes sont ensuite concaténés pour nommer une portion du flux, et le nom ainsi obtenu est comparé à celui préalablement déterminé pour un contenu à rechercher. Si la comparaison des noms ne révèle pas une concordance entre le contenu à rechercher et la portion du flux, le système continue sa tentative d'identification de la portion du flux en renouvelant l'opération pour un autre contenu à rechercher. Ce système est adapté pour essayer d'identifier le contenu qui se présente dans une portion déterminée d'un flux vidéo.

Mais il ne résout pas le problème précité de détecter a posteriori, de façon relativement rapide, des contenus qui ne sont pas déterminés au moment de la réception ou de l'enregistrement de flux vidéo de grande taille.

Un but de la présente invention est précisément de répondre à ce besoin.

L'invention propose ainsi un procédé de détection d'occurrences de contenus dans au moins un flux d'information, comprenant :
- une phase d'acquisition, dans laquelle on enregistre pour chaque flux une série d'empreintes numériques calculées d'après l'information dudit flux;
- une phase de génération de signature, dans laquelle on sélectionne au moins une portion de référence d'un contenu à détecter, indéterminé dans la phase d'acquisition, et on inclut dans une signature dudit contenu des empreintes numériques calculées d'après l'information de chaque portion de référence sélectionnée ; et
- une phase de recherche des empreintes de la signature générée dans chaque série d'empreintes enregistrée.

Les flux d'information concernés sont avantageusement, mais non obligatoirement, des flux vidéo. La phase d'acquisition peut être exécutée en temps réel lors de la réception d'un canal de diffusion vidéo ou lors de l'enregistrement de séquences vidéo dans une base de données. Le contenu à détecter peut provenir d'un flux qui a été traité dans la phase d'acquisition ou d'une source distincte.

Les empreintes numériques sont calculées de façon systématique d'après les informations successives du flux. A titre d'exemple, pour un flux vidéo à 25 images par seconde, on peu calculer une empreinte par image toutes les cinq images, c'est-à-dire 5 empreintes par seconde. Chaque empreinte est de petite taille (quelques octets), et elle ne décrit donc pas de manière unique l'image d'après laquelle elle calculée. En revanche, une série d'empreintes calculées sur une séquence vidéo de quelques secondes à quelques heures caractérise de manière quasi-unique l'information du flux.

La série d'empreintes calculée pour un contenu tel qu'un film à long métrage donne lieu à un fichier pouvant atteindre une taille de l'ordre du mégaoctet. En pratique, rechercher un fichier d'une telle taille dans des séries d'empreintes collectées sur une longue période sur un ou plusieurs canaux parallèles n'est pas réalisable dans un délai raisonnable.

Pour réaliser néanmoins la recherche dans de bonnes conditions, on procède à une sélection, interactive ou automatique, d'une ou plusieurs portions de référence dans le contenu à détecter afin de n'inclure dans la signature que les empreintes correspondant à ces portions de référence. Ceci permet d'effectuer la recherche à grande vitesse, tout en se fondant sur les portions pertinentes du contenu à rechercher. Cela permet également de ne pas manquer des occurrences du contenu dans lesquelles auraient été insérées d'autres séquences telles que par exemple des spots publicitaires.

D'autres particularités et avantages de la présente invention apparaîtront dans la description ci-après d'un exemple de réalisation non limitatif, en référence aux dessins annexés, dans lesquels :
- la figure 1 est un schéma synoptique d'un système pour la mise en oeuvre du procédé selon l'invention ; et
- la figure 2 illustre un exemple d'interface graphique pouvant être présentée à un utilisateur dans la phase de génération de signature.

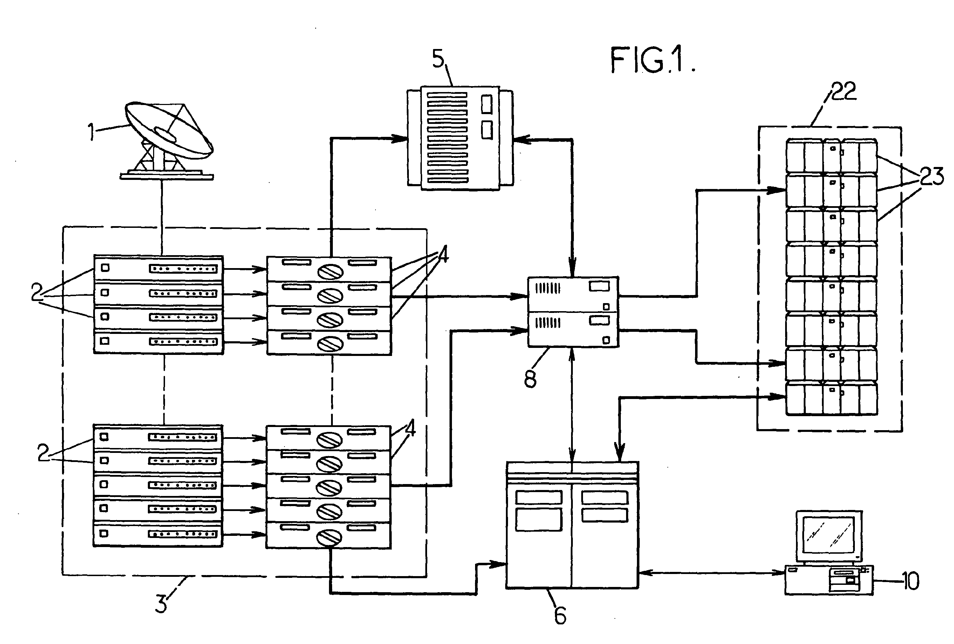

Le système représenté sur la figure 1 est une plate-forme pour réaliser un service tel que mentionné en introduction, ayant pour objet de détecter a posteriori des occurrences de contenus dans des flux vidéo qui ont été diffusés sur plusieurs chaînes de télévision.

Dans l'exemple considéré, les signaux de télévision diffusés sont captés par une ou plusieurs antennes satellite 1, dont les signaux de sortie sont adressés à une batterie de décodeurs DVB 2 ("Digital Video Broadcast"). Naturellement, en fonction de la nature et du mode de réception des signaux de télévision pris en considération, le système pourra comprendre des récepteurs et/ou des décodeurs de types variés. Chaque décodeur 2 est réglé pour recevoir sur un canal de diffusion particulier correspondant à une chaîne de télévision dont le flux de programmes vidéo est pris en considération. Le cas échéant, des droits d'accès aux programmes auront été obtenus en souscrivant des abonnements appropriés auprès d'opérateurs satellite.

Outre les décodeurs 2, le module d'acquisition 3 du système inclut des ordinateurs 4 qui effectuent une compression numérique des flux vidéo fournis par les décodeurs 2, après les avoir numérisés si nécessaire, et calculent des séries d'empreintes numériques correspondantes. Dans l'exemple d'architecture représenté, un ordinateur 4, par exemple de type PC, a en charge le flux vidéo d'une chaîne de télévision issu d'un décodeur respectif 2.

Les flux numérisés et compressés par les ordinateurs 4 sont transmis à une unité d'archivage 5 pour être conservés en mémoire sur une durée qui est par exemple de l'ordre d'une année, ou davantage selon les capacités de stockage disponibles. Diverses méthodes de compression classiques peuvent être utilisées par les ordinateurs 4, par exemple de la compression MPEG ("Moving Picture Expert Group"). La compression et l'archivage des flux sont effectués en temps réel au fur et à mesure de leur réception.

L'autre opération effectuée en temps réel est le calcul et l'enregistrement des empreintes numériques. Chaque empreinte numérique, ci-après appelée PSF ("Permanent Simplified Fingerprint"), correspond à une image respective ("video frame") du flux traité. Cette empreinte est de préférence de petite taille, par exemple de 20 octets. Dans ce cas, elle ne procure pas une caractérisation unique, non-ambiguë de l'image correspondante, ce qui n'est pas recherché, mais son calcul en temps réel ne pose pas de difficulté.

Les PSF sont calculées d'après des images choisies automatiquement par un processus déterministe. La réalisation la plus commode consiste à les calculer d'après des images extraites à intervalles de temps réguliers dans le flux vidéo. Typiquement, on pourra prendre une image sur 5, soit 5 images par seconde dans le cas courant où la cadence du flux vidéo est de 25 images par seconde.

Les données incluses dans chaque PSF calculée d'après une image source du flux vidéo peuvent être très diverses par leur nature. Elles incluent avantageusement les éléments suivants:
- des données décrivant la distribution spatiale de la luminance dans l'image source, par blocs de pixels répartis dans l'image source;
- des données décrivant les principales formes présentes au sein de l'image source. Ces données sont de préférence codées en logique floue, conformément aux méthodes bien connues dans le domaine de la reconnaissance de forme;
- un indicateur de pertinence obtenu en comparant les données de la PSF courante avec une ou plusieurs PSF précédentes de la série et qui est une représentation de la non-similarité par rapport aux images précédentes du flux vidéo. Cet indicateur de pertinence permet d'accélérer les recherches futures par une élimination rapide des images peu ou pas caractéristiques.

Les séries d'empreintes PSF calculées par les ordinateurs 4 pour les différents flux vidéo sont enregistrées de manière synchrone avec ces flux dans une base de données maintenue dans un système serveur 6. Le synchronisme est aisément réalisé lorsque les PSF sont calculées à intervalles réguliers et sont de taille fixe, en enregistrant les PSF les unes à la suite des autres dans un fichier enregistré dans la base 6.

La supervision et la distribution des tâches dans le système représenté sur la figure 1 sont assurées par une unité de contrôle et de multiplexage 8 reliée aux différents organes du système.

Alors que la phase d'acquisition est réalisée en continu par le module 3 qui enregistre les données dans l'unité d'archivage 5 et la base de données d'empreintes 6, les phases de génération de signature et de recherche de signature sont exécutées en fonction des requêtes présentées de manière interactive par un utilisateur, par exemple au moyen d'un ordinateur personnel 10 formant pupitre de commande. Naturellement, l'utilisateur peut également accéder au système par l'intermédiaire d'un réseau local ou étendu.

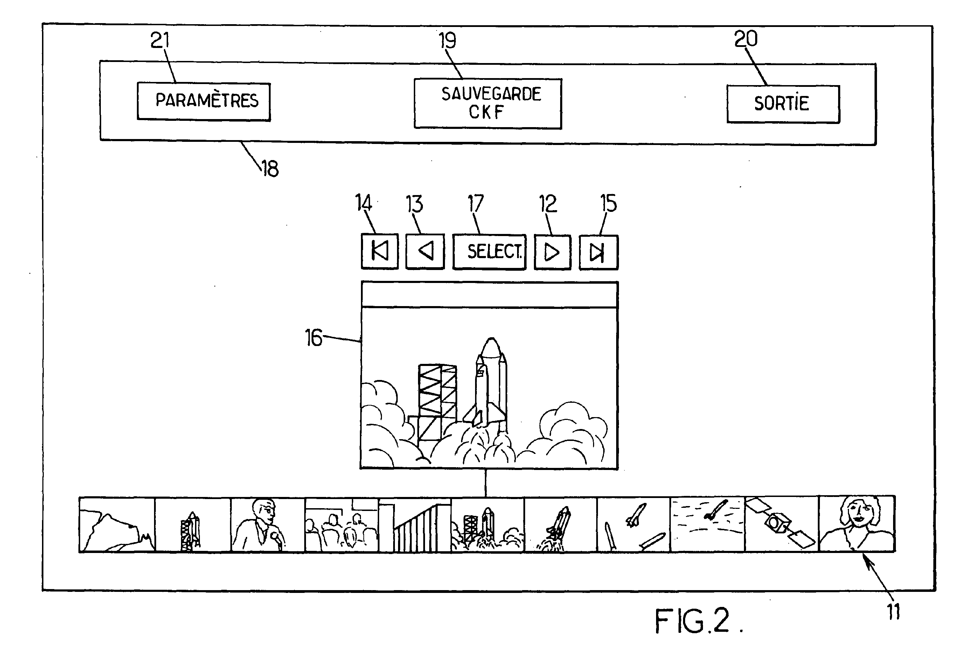

Dans la phase de génération de signature, l'utilisateur spécifie d'abord un contenu vidéo qui sera à rechercher. Ce contenu à signer peut consister en un fichier résidant sur le disque dur de l'ordinateur 10 ou lu dans un périphérique de celui-ci. Il peut aussi être un fichier d'archives récupéré depuis l'unité 5. L'utilisateur lance alors sur l'ordinateur 10 une procédure de génération de signature qui lui présente une interface graphique telle que par exemple celle illustrée par la figure 2.

Dans cet exemple, l'affichage comporte en partie basse un bandeau 11 où apparaissent les miniatures d'images successives du contenu à signer. L'intervalle de temps (réglable) entre deux images successives du bandeau est par exemple d'une à quelques secondes. Des boutons de navigation permettent à l'utilisateur de se déplacer vers l'avant (12), vers l'arrière (13), au début (14) ou à la fin (15) de la séquence vidéo formant le contenu à signer. Une zone centrale 16 de l'affichage est réservée à l'écran d'un lecteur vidéo où une portion de vidéo, commençant par l'image dont la miniature se trouve au centre du bandeau 11, est présentée à l'utilisateur. L'utilisateur est invité à sélectionner cette portion en tant que portion de référence, en cliquant sur un bouton de sélection 17, s'il considère que la séquence qu'il visualise avec le lecteur 16 est pertinente par rapport à la recherche qu'il souhaite effectuer. Les portions qui ont été sélectionnées peuvent alors apparaître sous une forme particulière (couleur, encadrement, ...) dans le bandeau de miniatures 11.

Chaque portion de référence sélectionnée par l'utilisateur consiste en un groupe d'images successives traité par l'ordinateur 10 qui calcule les empreintes numériques PSF selon le même mode opératoire que précédemment. Il obtient ainsi pour chaque portion de référence un "module" constitué par un nombre de PSF correspondant à la taille de la portion de référence sélectionnée.

Le fichier contenant les modules relatifs aux portions de référence sélectionnées par l'utilisateur constitue la signature unique du contenu à rechercher, appelée ici CKF ("Complex Keyframe Fingerprint").

L'interface utilisateur représentée sur la figure 2 comporte également une zone de menu 18 qui, dans l'exemple simplifié représenté sur la figure, comporte trois boutons:
- un bouton de sauvegarde 19 qui, lorsqu'il est actionné (cliqué) par l'utilisateur, commande l'enregistrement sur disque du fichier CKF généré en tant que signature du contenu;
- un bouton 20 de sortie de l'interface de génération de signature; et
- un bouton 21 donnant accès à une autre fenêtre où l'utilisateur peut spécifier un certain nombre de paramètres du système, comme par exemple la cadence des images, la cadence des PSF, le nombre de PSF par module de la CKF, ou divers paramètres de réglage des algorithmes de logique floue utilisés pour reconnaître la signature. Si nécessaire, les valeurs de ces différents paramètres peuvent être placées dans un entête du fichier CKF afin de les rendre disponibles au programme de reconnaissance.

Le contenu vidéo à rechercher peut être de durée très variable, typiquement de quelques secondes à plusieurs heures. Le nombre total d'empreintes PSF de la signature CKF pourra quant à lui varier typiquement de 20 à 80 selon la sélection opérée par l'utilisateur, ce qui limitera la taille du fichier CKF, en-tête inclus, à 1 ou 2 kilooctets environ. Cette relative compacité de la signature permet d'effectuer des recherches à grande vitesse, même sur des cibles massives.

Même si le contenu à rechercher est relativement long (par exemple un film à long métrage), il suffira généralement de sélectionner un nombre assez petit d'images dans les portions de référence pour générer une signature caractérisant de manière fiable et quasi-unique le contenu en question. La génération de la signature peut être totalement automatique ou résulter d'une sélection interactive par l'utilisateur, permettant de ne retenir que les portions qu'il juge perceptuellement les plus importantes.

Une fois que l'utilisateur a construit une signature CKF, il peut lancer la phase de recherche. Pour ce faire, il désigne:
- la CKF du contenu à rechercher;
- la ou les chaînes dans les programmes desquelles la recherche est à effectuer; et
- la ou les tranches de temps (par exemple journées) dans lesquelles ces programmes ont été diffusés.

La recherche proprement dite est effectuée par une unité de calcul 22 comprenant un ensemble de calculateurs 23. La recherche de chaque signature CKF est généralement répartie entre les calculateurs 23. Chacun de ces calculateurs reçoit de l'unité de contrôle et de multiplexage 8 des fichiers de PSF lus dans la base de données 6 et correspondant par exemple chacun à 24 heures de programme d'une chaîne de télévision. Ces fichiers ont des chevauchements temporels entre eux, par exemple de l'ordre d'une heure, pour éviter de manquer une occurrence d'un contenu recherché qui serait à cheval sur deux tranches successives de 24 heures. Un tel fichier a typiquement une taille de 8 à 10 mégaoctets. Un fichier représentant une journée de programme est traité par le calculateur 23 qui y recherche les empreintes PSF de chaque signature CKF pour laquelle un travail de recherche est en cours et pour laquelle l'utilisateur a spécifié une cible de recherche incluant cette journée de programme.

Le processus de reconnaissance proprement dit utilise un segment temporel glissant dont la durée est de l'ordre de celle du contenu vidéo signé par la CKF. Dans ce parcours, la validité du segment est évaluée à chaque instant grâce aux indicateurs de pertinence enregistrés dans les empreintes. Si ce premier test montre que le segment est valide par rapport à la signature recherchée, les données décrivant les formes sont comparées entre elles par un algorithme connu de logique floue, dont les paramètres ont pu être ajustés par l'utilisateur. Si ce deuxième test est également positif, le programme de reconnaissance calcule la corrélation de la distribution dans l'espace de la luminance de l'image d'après les données décrivant cette distribution. Si la corrélation obtenue dépasse un seuil prédéfini ou réglé par l'utilisateur, le segment est retenu comme incluant une occurrence du contenu recherché, et le programme de reconnaissance délivre une adresse repérant la position du segment dans le fichier de PSF. Cette adresse peut être exprimée de façon plus détaillée en repérant la position de chaque module de la CKF dans le fichier de PSF. L'identité du fichier de PSF désigne la chaîne et le jour de diffusion, et l'adresse délivrée par l'algorithme de reconnaissance adresse indique l'heure à laquelle l'algorithme a estimé que le contenu a été diffusé. Ces informations (identité du fichier de PSF, adresse) sont enregistrées dans un fichier de résultats qui est retourné à l'utilisateur soit à la fin du processus de recherche, soit au fur et à mesure que des occurrences sont détectées par les calculateurs 23.

Pour compléter et fiabiliser le service, il possible de procéder à une phase de vérification, par exemple à l'aide de l'ordinateur 10. Dans cette phase de vérification, un opérateur utilise le fichier de résultats pour accéder à l'unité d'archivage 5 et en extraire les séquences de programme où le contenu recherché à été reconnu ou des images-clé de ce programme. L'opérateur peut alors visualiser ces séquences dans la version qui a été compressée et archivée en temps réel au cours de la diffusion. Pour que la vérification soit rapide, il suffit à l'opérateur de s'assurer que les séquences archivées comprennent bien les portions de référence qui ont été sélectionnées lors de la construction de la CKF. La structure même de cette signature et du fichier de résultats, qui repèrent les portions de référence, permet d'accéder rapidement aux portions pertinentes des séquences enregistrées pour que le vérificateur puisse valider les résultats de la reconnaissance automatique.

L'archivage des flux compressés dans l'unité 5, qui est optionnel dans le principe général de l'invention, a pour avantage de permettre de fiabiliser le processus de reconnaissance grâce à la phase de vérification. De plus, cet archivage peut être réalisé dans un cadre légal certifié, ce qui permet en cas de besoin d'apporter des preuves de diffusion de tel ou tel contenu afin de régler les litiges.

Bien qu'on ait décrit ci-dessus l'invention dans le contexte d'un service de surveillance de chaînes de télévision et de recherche dans les programmes de ces chaînes de contenus spécifiques, on comprendra que la technique de détection décrite ci-dessus peut trouver des applications dans divers autres domaines, notamment celui de l'indexation des bases de données vidéo de grande taille.

## Revendications

1. Procédé de détection d'occurrences de contenus dans au moins un flux d'information, comprenant:
- une phase d'acquisition, dans laquelle on enregistre pour chaque flux une série d'empreintes numériques calculées d'après l'information dudit flux;
- une phase de génération de signature, dans laquelle on sélectionne au moins une portion de référence d'un contenu à détecter, indéterminé dans la phase d'acquisition, et on inclut dans une signature dudit contenu des empreintes numériques calculées d'après l'information de chaque portion de référence sélectionnée; et
- une phase de recherche des empreintes de la signature générée dans chaque série d'empreintes enregistrée.

2. Procédé selon la revendication 1, dans lequel le flux d'information est reçu sur un canal de diffusion et la phase d'acquisition comporte une analyse en temps réel du flux d'information reçu, dans laquelle les empreintes numériques sont calculées et enregistrées.

3. Procédé selon la revendication 1 ou 2, dans lequel on enregistre une version compressée du flux d'information dans la phase d'acquisition, de manière synchrone avec la série d'empreintes numériques calculées d'après l'information dudit flux.

4. Procédé selon la revendication 3, comprenant en outre une phase de vérification dans laquelle un opérateur consulte le flux d'information dans la version compressée qui a été enregistrée, et s'assure de l'occurrence de chaque portion de référence sélectionnée dans le contenu à détecter, à des endroits déterminés dans la phase de recherche.

5. Procédé selon l'une quelconque des revendications précédentes, dans lequel le flux d'information est un flux vidéo.

6. Procédé selon la revendication 5, dans lequel chaque empreinte numérique de la série est calculée d'après une image respective du flux vidéo.

7. Procédé selon la revendication 6, dans lequel les empreintes numériques sont calculées d'après des images régulièrement espacées du flux vidéo.

8. Procédé selon la revendication 6 ou 7, dans lequel chaque empreinte numérique de la série des données comprend des données décrivant une distribution spatiale de la luminance par blocs de pixels répartis au sein de l'image.

9. Procédé selon l'une quelconque des revendications 6 à 8, dans lequel chaque empreinte numérique de la série comprend des données décrivant des formes présentes au sein de l'image.

10. Procédé selon la revendication 9, dans lequel les données décrivant des formes présentes au sein de l'image sont codées en logique floue.

11. Procédé selon l'une quelconque des revendications 6 à 10, dans lequel chaque empreinte numérique de la série comprend un indicateur de pertinence résultant d'une comparaison avec au moins une empreinte précédente de la série.

12. Procédé selon l'une quelconque des revendications 6 à 11, dans lequel chaque portion de référence sélectionnée dans la phase de génération de signature comprend une image ou un groupe d'images qui se succèdent dans le contenu à détecter.

13. Procédé selon la revendication 12, dans lequel les images des portions de référence sélectionnées dans la phase de génération de signature sont définies de manière interactive par un utilisateur au moyen d'une interface graphique présentant des séquences du contenu à détecter.

14. Procédé selon chacune des revendications 7 à 12, dans lequel la phase de recherche comporte un premier test portant sur les indicateurs de pertinence inclus dans les empreintes du flux et de la signature suivi, si le premier test est positif, par un second test portant sur les données de description de formes codées en logique floue dans les empreintes du flux et de la signature et suivi, si le second test est également positif, par un troisième test portant sur les données de description de distribution spatiale de luminance incluses dans les empreintes du flux et de la signature.
